# EUROPEAN PATENT SPECIFICATION

(11) **EP 3 813 971 B1**
(45) Date of publication and mention of the grant of the patent: **06.03.2024**
(21) Application number: 19732673.9
(22) Date of filing: 26.06.2019
(51) Int. Cl.: B01D 19/00, B01D 53/58

(54) **STRIPPING AND SCRUBBING SYSTEM FOR AMMONIA RECOVERY**
STRIPPING- UND WASCHSYSTEM ZUR AMMONIAKRÜCKGEWINNUNG
SYSTÈME D'EXTRACTION ET DE LAVAGE POUR LA RÉCUPÉRATION D'AMMONIAC

(30) Priority: 26.06.2018 EP 18179897
(43) Date of publication of application: 05.05.2021
(73) Proprietor: Detricon BVBA, 9000 Gent (BE)
(72) Inventor: DE WILDE, Denis, 9000 Gent (BE)
(74) Representative: Arnold & Siedsma
(86) International application number: PCT/EP2019/066973
(87) International publication number: WO 2020/002414

(56) References cited:
- WO-A1-2012/109737
- US-B1- 8 637 304
- H. W. H. MENKVELD ET AL: "Recovery of ammonia from digestate as fertilizer", WATER PRACTICE AND TECHNOLOGY, vol. 13, no. 2, 1 June 2018 (2018-06-01), pages 382-387, XP055617505, DOI: 10.2166/wpt.2018.049
- M. Camargo-Valero ET AL: "Techniques for nutrient recovery from manure and slurry", , 1 January 2015 (2015-01-01), XP055617508, DOI: 10.13140/RG.2.1.2190.7602 Retrieved from the Internet: URL:https://www.researchgate.net/publicati on/299511056_Techniques_for_nutrient_recov ery_from_manure_and_slurry
- Wendong Tao ET AL: "Design Considerations to Scale up Vacuum Thermal Stripping for Ammonia Recovery from Anaerobic Digestate", , 31 December 2017 (2017-12-31), pages 1-14, XP055617641, Retrieved from the Internet: URL:https://pdfs.semanticscholar.org/a620/ e92d48c4a8693683d7e90c2623c2ef8dd0ad.pdf [retrieved on 2019-09-03]
- F. LAUGIER ET AL: "Ultrasound in gas-liquid systems: Effects on solubility and mass transfer", ULTRASONICS: SONOCHEMISTRY., vol. 15, no. 6, 17 March 2008 (2008-03-17) , pages 965-972, XP055617655, GB ISSN: 1350-4177, DOI: 10.1016/j.ultsonch.2008.03.003
- ERRICO MASSIMILIANO ET AL: "Treatment costs of ammonia recovery from biogas digestate by air stripping analyzed by process simulation", CLEAN TECHNOLOGIES AND ENVIRONMENTAL POLICY, SPRINGER BERLIN HEIDELBERG, BERLIN/HEIDELBERG, vol. 20, no. 7, 25 November 2017 (2017-11-25), pages 1479-1489, XP036569145, ISSN: 1618-954X, DOI: 10.1007/S10098-017-1468-0 [retrieved on 2017-11-25]

## Description

### Field of the invention

The invention relates to arrangements of systems for producing ammonia nitrogen, related selected systems for use therein, suitable measurement methods and computer products and related storage media for control of said arrangements.

### Background of the invention

Current stripping and scrubbing systems for the production of liquid ammonium salts are energy and chemical intensive and a source of air pollution as ammonia contributes to secondary fine particle formation in the atmosphere. Ammonium salt production from an input stream with an ammonia concentration lower than 0,3 mass% costs more than the biological destruction and transformation in nitrogen gas. The main reasons are poor quality and value of the produced ammonium salt as the properties are not stable and the energy and chemical costs go up when the ammonia concentration of the input stream goes down.

Industries and farmers therefor choose to transform the excess of ammonia in their liquid waste streams into nitrogen gas even though the surrounding need for ammonia on the local fields. Downside of these biological systems part of the nitrogen is transformed into laughing gas being a dangerous greenhouse gas and these systems use a lot of energy for aeration.

H. W. H. MENKVELD ET AL: "Recovery of ammonia from digestate as fertilizer", WATER PRACTICE AND TECHNOLOGY, vol. 13, no. 2, 1 June 2018, pages 382-387, XP055617505, DOI: 10.2166/wpt.2018.049 and respectively

M. Camargo-Valero ET AL: "Techniques for nutrient recovery from manure and slurry", 1 January 2015, XP055617508, DOI: 10.13140/RG.2.1.2190.760 disclose ammonia recovery systems and methods comprising an stripping uinit and a scrubbing unit.

### Aim of the invention

The invention aims at providing arrangements of systems for producing ammonia nitrogen able to provide high quality ammonia nitrogen, but also efficient arrangements in terms of energy consumption and/or reagents. Moreover, also improvements in relation to environmental and air quality impact are provided.

### Summary of the invention

The invention relates to an efficient arrangement of systems for producing a final output stream from an initial input stream, more in particular said output stream, being a liquid stream, having more than 8 mass % (80.000 g/ton) ammonia nitrogen, while said input stream, being a liquid or solid stream, having more than 50 g/ton ammonia nitrogen. For sake of clarity, with solid input stream is meant a liquid stream with solids suspended therein. The total input stream thus comprises liquid and solid part within the stream. The solid of the input stream can be interpreted as the solids or solid particles being part of the input stream, comprising also liquid.

The essential features of the invention are explicitly defined in the wording of independent method clam 1 and respectively in the wording of independent control system 13. Further technical features of the invention are explicitly defined in the wordings of the dependent claims .

The arrangement of systems used in the method of the invention comprises a first system, referred to as stripping system, for recovering from a first stream, being a liquid or solid input stream, having more than 50 g/ton ammonia nitrogen, via further systems, a second stream, being a liquid output stream, more in particular referred to as a first liquid output stream whereas the final output is also a liquid output stream, having more than 8 mass % (80.000 g/ton) ammonia nitrogen.

The arrangement of systems used in the method of the invention comprises also a second system, called scrubbing system, for producing from a first gaseous flow, also called a gaseous input flow a second gaseous flow, or gaseous output flow, wherein the first gaseous flow or gaseous input flow originates from the stripping system; and the second gaseous flow or gaseous output flow being emitted from the scrubbing system is (entirely) re-entered and re-used in the stripping system.

The arrangement of systems used in the method of the invention may further comprise of a third system being an adsorption system for further optimizing the quality of the first liquid output stream by further reducing the amount of volatile fatty acids or other volatile compounds, more in particular by use of activated carbon.

The arrangement of systems used in the method of the invention may further comprise of a fourth system for biomass growth, in particular for harvesting certain microbial proteins.

The arrangement of systems used in the method of the invention comprises of a fifth Venturi-like or Sonolator-like system for introducing and mixing the second gaseous flow or gaseous output flow from the scrubbing system with the liquid input stream for the first system or stripping system. For sake of clarity, the invention is related to a Venturi system with an extra blade placed in the flow.

The arrangement of systems used in the method of the invention may further comprise a sixth system or sonication system (or a plurality of sonication systems), applied to the initial liquid input stream or mixture of the solid part of first stream or input stream with the recovered liquid stream or second stream or liquid output stream or a mixture obtained with the Venturi-like or Sonolator-like system of such liquid streams with the reused gaseous output stream of the scrubbing system or liquid part of first stream or input stream, before it enters the first system or stripping system.

The arrangement is adapted for by selecting use (and related steering or control) of one or more of the systems to reduce the chemical reagents and/or the to-be supplied energy to the arrangement.

### Brief description of the drawings

Figure 1 shows an embodiment illustrating conceptually a combined stripping/scrubbing system with (here a ventilator supported) gas feedback flow (and optionally sonicator/adsorber/protein systems) in accordance with method of the invention.
Figure 2 shows an embodiment illustrating conceptually (no pumps or valves shown) liquid feedback stream in accordance with the method of the invention.
Figure 3a shows an embodiment illustrating conceptually (no pumps shown) a heat exchange arrangement (filter and heat exchanger) in accordance with the method of the invention.
Figure 3b shows an embodiment illustrating conceptually (no pumps shown) a heat exchange arrangement (filter and heat exchanger) with sonication system in accordance with the method of the invention.
Figure 3c shows an embodiment illustrating conceptually (no pumps or valves shown) liquid feedback stream with sonication system and indicating the use of a mixing tank (which operates also a storage tank to support the semi-batch operation of the system) in accordance with the method of the invention.
Figure 3d shows an embodiment illustrating conceptually (no pumps or valves shown) liquid feedback stream with a heat exchange arrangement (filter and heat exchanger) in accordance with the invention. method of the invention.
Figure 4a shows an embodiment illustrating more details on the concept of mixed continue/batch processing of liquid feedback stream means (fluid storage, pumps), including in-line measurement (which can be used as input for a control system not shown here) with a sonication-like system in accordance with the method and control system of the invention.
Figure 4b shows an embodiment illustrating more details on the concept of mixed continue/batch processing of liquid feedback stream means (fluid storage, pumps), including in-line measurement (which can be used as input for a control system not shown here) with a Venturi-like system used partly on the gas stream in accordance with the method and control of the invention.
Figure 4c shows an embodiment illustrating more details on the concept of mixed continue/batch processing of liquid feedback stream means (fluid storage, pumps), including in-line measurement (which can be used as input for a control system not shown here) with a Venturi-like system used entirely on the gas stream in accordance with the method and control of the invention.
Figure 4d shows an embodiment illustrating more details on the concept of mixed continue/batch processing of liquid feedback stream means (fluid storage, pumps), including in-line measurement (which can be used as input for a control system not shown here) with a Venturi-like system used partly on the gas stream, in combination with a sonication-like system in accordance with the method and control of the invention.
Figure 4e shows an embodiment illustrating more details on the concept of mixed continue/batch processing of liquid feedback stream means (fluid storage, pumps), including in-line measurement (which can be used as input for a control system not shown here) with a Venturi-like system used **entirely** on the gas stream with a sonication-like system in accordance with the method and control of the invention.
Figure 5 shows an embodiment illustrating a combination of the aspects illustrated in Figure 3 (heat exchange) and Figure 4 (referring to other systems, in much less detail or simplified version though) in accordance with the method of the invention.
Figure 6 shows an embodiment illustrating the aspects of ammonia recovery from a solid stream with the mechanical separation of the solid stream and reuse of the liquid stream in accordance with the invention.
Figure 7 shows an embodiment illustrating a side-view of the design where the second (or scrubbing) system is installed in the center of the first (or stripping) system in accordance with the method of the invention.

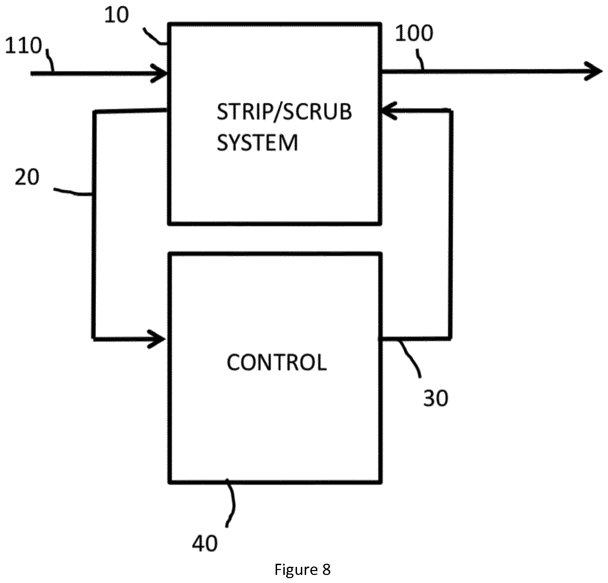

Figure 8 schematically provides an embodiment illustrating the relationship between the arrangement (strip-scrub system) and its control system used to steer the one or more elements of the arrangement in accordance with the method and control of the invention.

### Detailed description

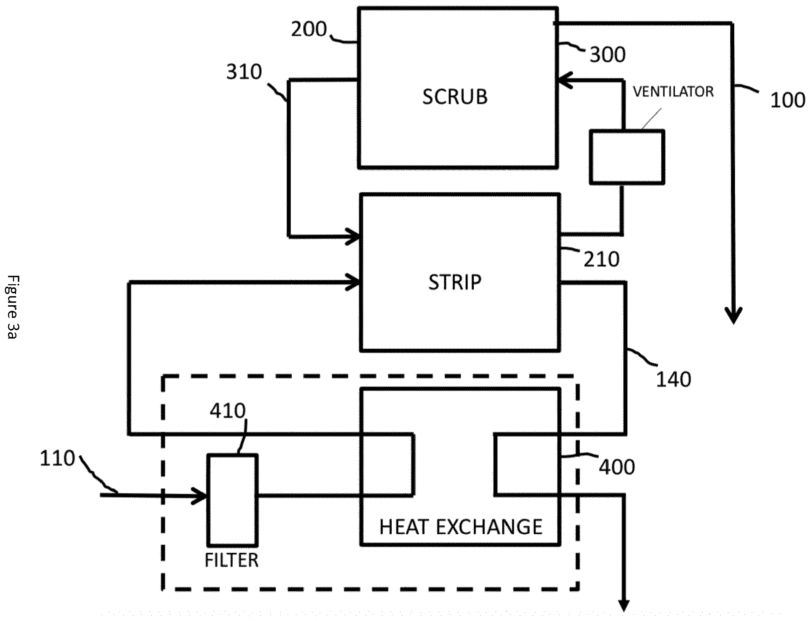

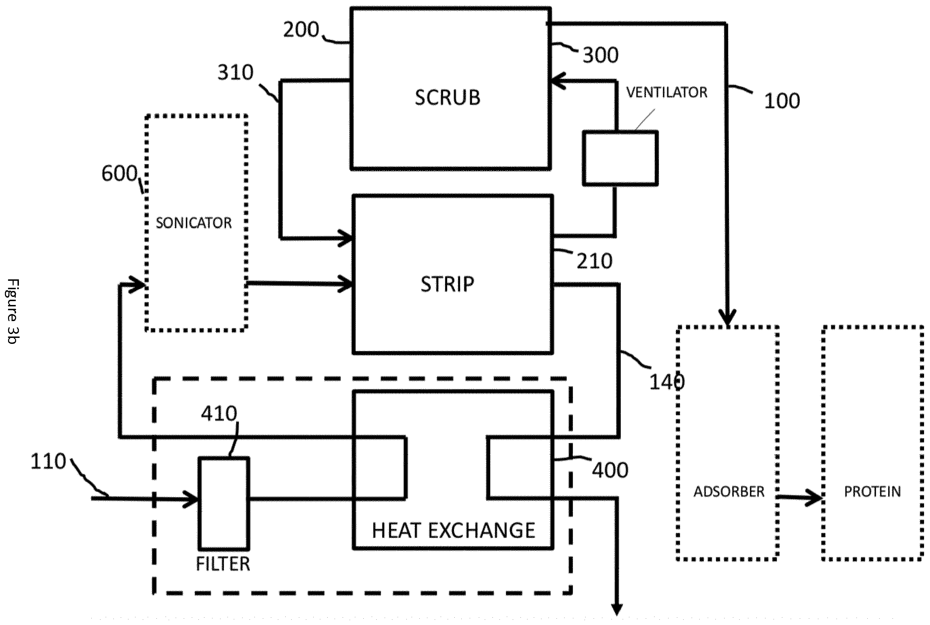

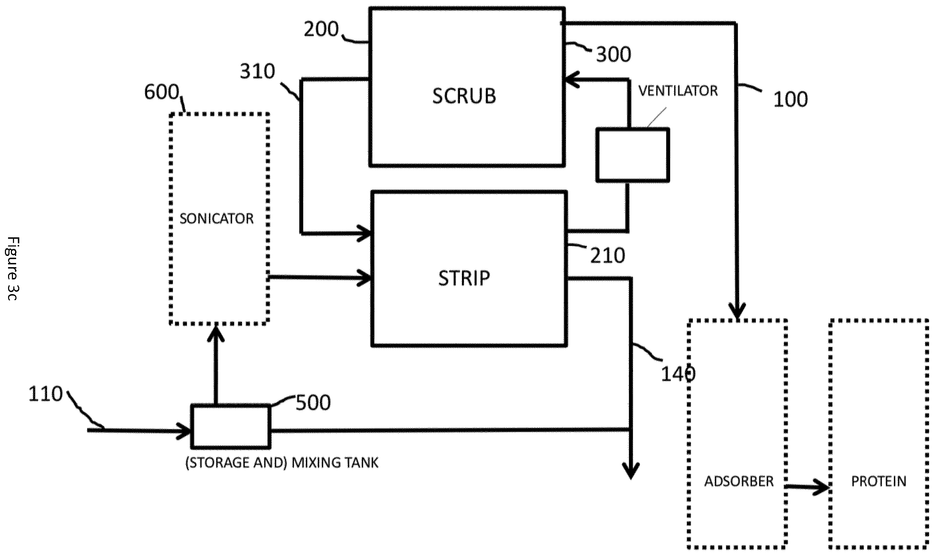

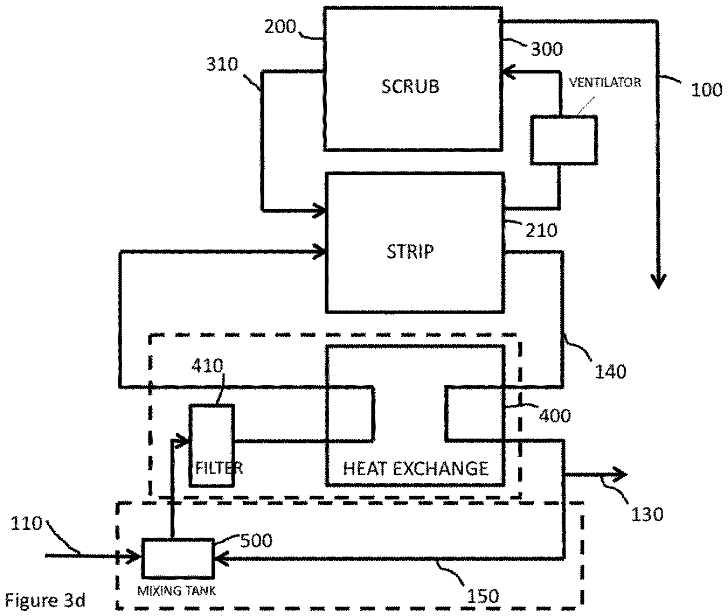

The invention provides an arrangement 10 (for example as shown in Fig 3a) of systems for producing a liquid *ammonia nitrogen containing* (in high amount) output stream 100 from an initial *ammonia nitrogen containing* (in low amount) liquid or solid input stream 110, more in particular based on a stripping - scubber system arrangement wherein said liquid output stream 100 originates from the first gaseous flow or gaseous input flow and an added acid (e.g. HNO3/H2SO4) (addition not shown) to produce an ammonium salt.

The invention is in particular adapted to be an efficient method in terms of energy consumption, more in particular to obtain a transformation of ammonia to nitrogen gas with less than 40 MJ/kg N, preferably less than 10 MJ/kg N up to even 2,1 MJ/kg N.

The invention is in particular adapted for producing a final output stream, with a factor 1000 higher in ammonia nitrogen concentration than the input stream, preferably a factor 1500 higher, up to even a factor 1600, wherein typically the output stream has a concentration of more than 10.000, preferably up to 90.000 g/ton ammonia nitrogen while the input stream may have a concentration of less than 100 g/ton, though even up to 50 g/ton ammonia nitrogen.

The invention relates hence typically to an efficient (integrated) arrangement of systems for producing a final output stream from an initial input stream, more in particular said final output stream, being a liquid stream, having more than 8 mass % (80.000 g/ton) ammonia nitrogen, while said input stream, being a liquid or solid stream, having more than 50 g/ton ammonia nitrogen. The arrangement is being arranged for minimizing the amount of to be used (chemical) reagents and/or the to-be supplied energy (such as heat and/or electricity for pumps, ventilators used therein as further illustrated).

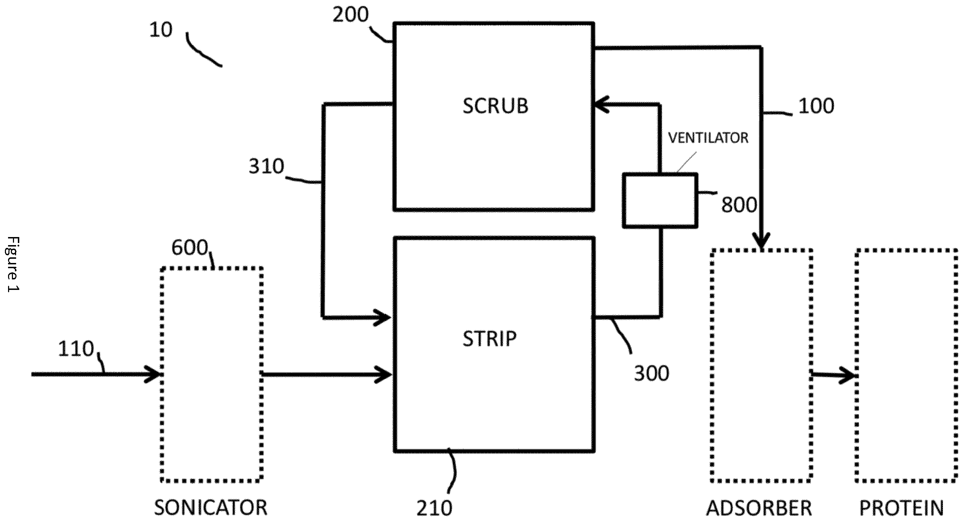

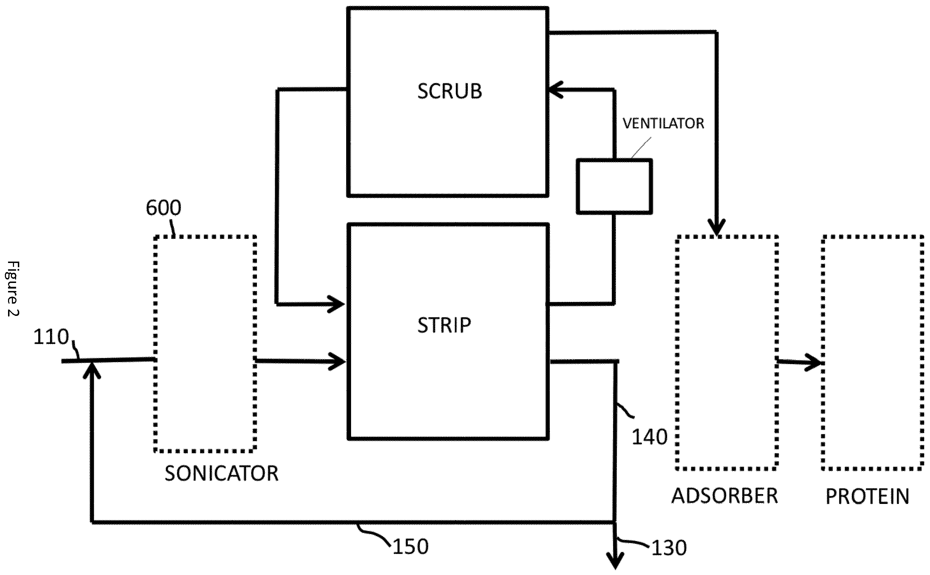

As shown in Figures 1 to 6, the arrangement of systems comprises a first or stripping system 210, for recovering from a first stream or, liquid or solid input stream, having more than 50 g/ton ammonia nitrogen (by use of a stripping process) a second stream, or first liquid output stream or liquid output of said first system, having more than 8 mass% (80.000 g/ton) ammonia nitrogen.

As shown in Figures 1 to 6, the arrangement of systems used in the method of the invention comprises a second or scrubbing system 200, for producing from a first gaseous flow or gaseous input flow 300 (by use of a scrubbing process) a second gaseous flow or gaseous output flow 310, whereby said first gaseous flow or gaseous input flow originates from said first system; and said second gaseous flow or gaseous output flow is re-used and re-entered (entirely) in said first system. In terms of gaseous flow, said first and second systems hence define a closed system. This method additionally to be being efficient, avoids environmental pollution e.g. in terms of odor (entirely).

In an embodiment of the invention, the second system comprises a demister.

In an embodiment of the invention, the gaseous flow is driven by a ventilator 800 or a Venturi-like system 700 or a Sonolator-like Venturi system.

As shown in Figures 1 to 6, the arrangement may further comprise of a third system for further optimizing the quality of the first (liquid) output stream by further reducing the amount of volatile fatty acids (entirely), said third system being based on adsorption, more in particular by use of activated carbon. The third system uses either a particular selected mixture of activated carbon, based on coal or coconut in a respective percentage range of 100/0 - 0/100, more optimal 30/100 - 45/100 and/or an appropriate amount of (repetitively) pumping said stream through said activated carbon.

As shown in Figures 1 to 6, the arrangement may further comprise of a fourth system related to protein harvesting where the first liquid output stream is used as a nitrogen source for microbial protein production. The output gasses of a CHP (combined heat and power) system, or other combustion motor, containing CO₂ can be used as a carbon source. The electrolysis of water can be used for O₂ and H₂ respectively for the oxygen and hydrogen incorporation in the microbial proteins. The nitrogen source has to be in a ratio of 10-20 %, best 16% of the total mass N, C, O and H.

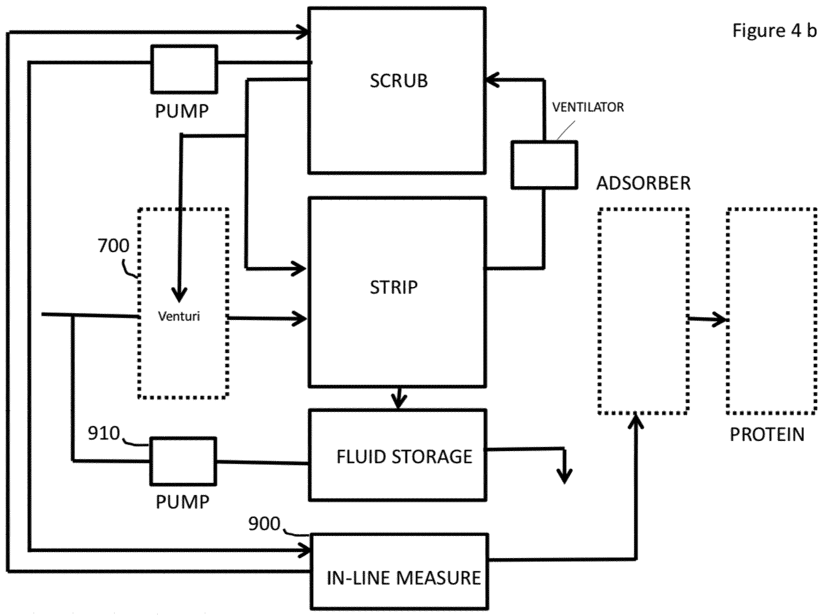

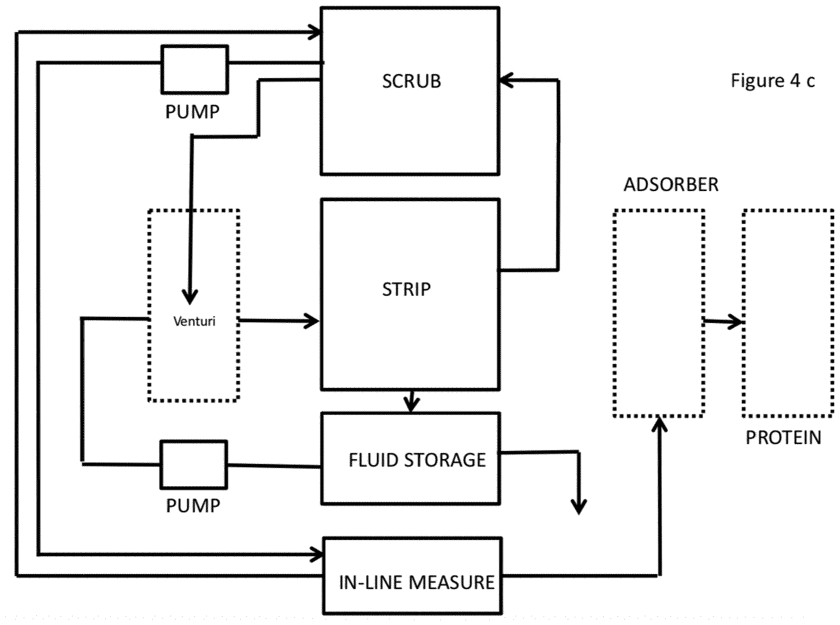

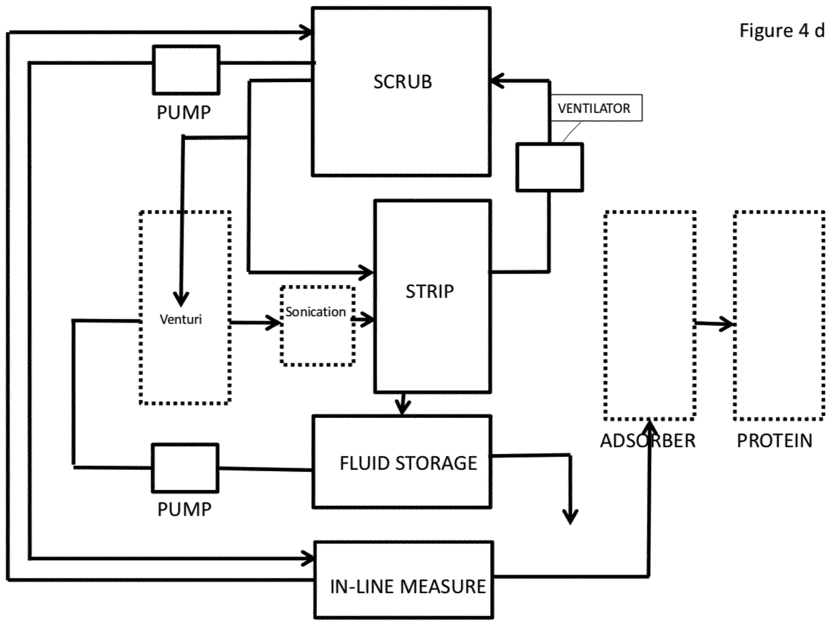

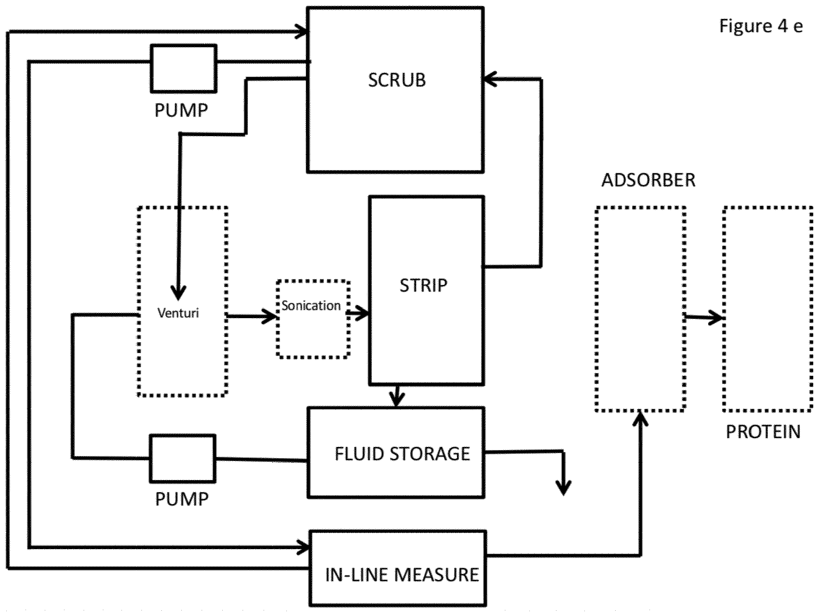

As shown in Figures 4b, 4c, 4d, 4e, the arrangement comprises of a fifth system, applied to the initial liquid input stream before it enters the first or stripping system. Such fifth system may be used additionally to reduce the chemical reagents and/or the to-be supplied energy to the first system. The fifth system uses a Venturi or venture-like system with an air to liquid ratio between 3/1 and 20/1, more preferably 6/1 and 8/1. The gaseous output flow of the second or scrubbing system is introduced in the liquid (input) stream before it enters the first system. In an exemplary embodiment the pressure is between 3 and 6 bar, preferably between 4 and 5 bar and a flow of liquid of 10 cube m per hour of the liquid stream and 35 cube m per hour of gaseous flow. In a particular embodiment after the introduction of the gaseous stream in the liquid (input) stream entering the first system, with the Venturi or venture-like system a blade is provided (similar as in Sonolator or Sonolater-like systems) in the middle of the flow where cavitation processes enhance the mixing between air and liquid phase.

As shown in Figure 1, 2, 3b, 3c, 4a, 4d, 4e, 5 and 6 the arrangement may further comprise of a sixth system, applied to the initial liquid input stream before it enters the first system. Such sixth system may be used additionally to reduce the chemical reagents and/or the to-be supplied energy to the first system. The sixth system uses an alternating or static electrical field on the input stream being used (and recirculated as described further) in the first system. Using different (eigen)frequencies of the ammonia molecule brings the ammonia molecule in an excited state and enhances the transfer from liquid to gas phase. Hence, before the ammonia can give his energy to the surrounding medium, it is passed through a sonicator 600 or sonication system and a spraying nipple. Time between exciting the ammonia and spraying of the input stream is preferably less than 5 seconds, more preferably between 0,1 and 0,3 seconds. Typical sonicator frequency is between 500 and 1500 GHz, more preferably between 570 and 580 GHz and more preferably between 1150 and 1100 GHz, is used to make ammonia vibrate and enhances the mass transfer of ammonia to the gas phase. An additional sonication system with a frequency in the ultrasonic field may further be placed in the stripping column to destroy foaming, especially when treating organic liquid streams as the entire liquid phase can then be transformed in foam, making the circulation of the liquid stream and the transfer of ammonia to second system impossible as the gaseous phase is captured in the foam. This additional sonication system can be placed above the liquid phase in the stripping column or in the liquid phase of the stripping column or before the spaying nipple where the liquid phase enters the stripper (or first system). The problem of stabilized gas bubbles can be reduced by means of degassing the liquid phase with the sonicator. The surface tension of the foam can be further reduced by addition of glycerine in a dosage of 0,5 to 2 l per ton to improve the foam destruction and formation.

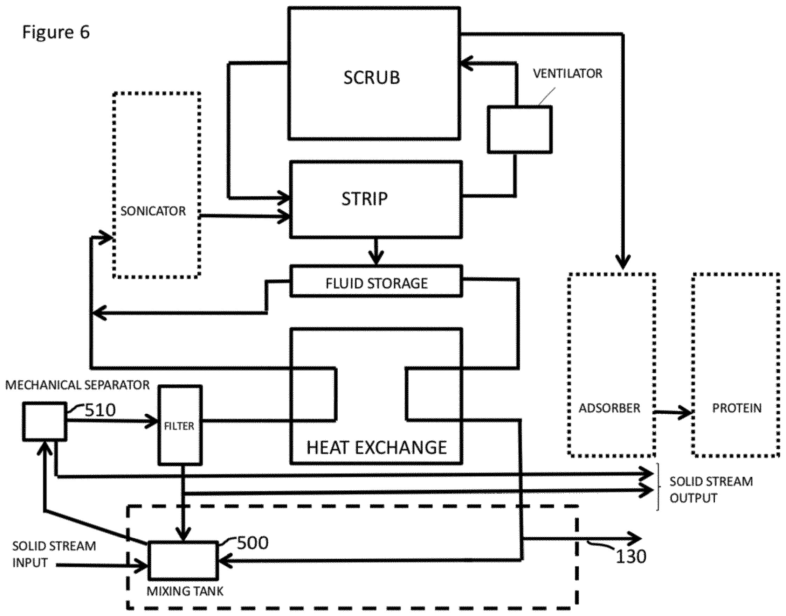

As shown in Figure 6 in a first particular embodiment of the invention, the arrangement is adapted to enable that said first liquid input stream (140) is (entirely) fed back to be used to mix said first solid (for example an organic stream with a dry matter of 30%) input stream and the resulting mixture is fed back into the arrangement. Where the ammonia in the solid input stream is extracted in the liquid stream while it is mixed in the mixing tank and further squeezed out in the liquid stream during a mechanical separation. The solid stream after the mechanical separator e.g. a centrifuge can be recycled in the mixing tank. This can continue several times on the same solid input stream such that the ratio between liquid input stream and solid input stream can be altered and ammonia is extracted from the solid input stream in a concentration lower than 100 g per ton. The excess of liquid stream (130) can be released.

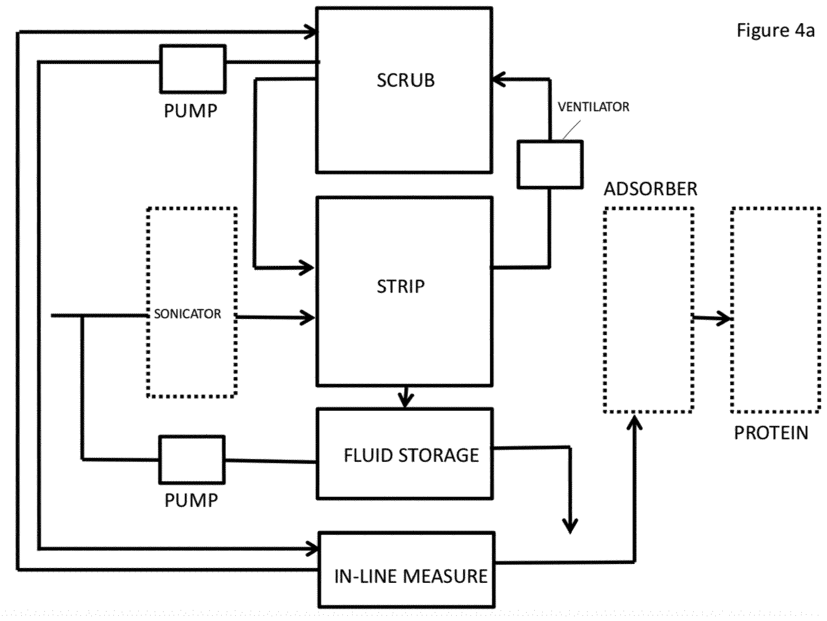

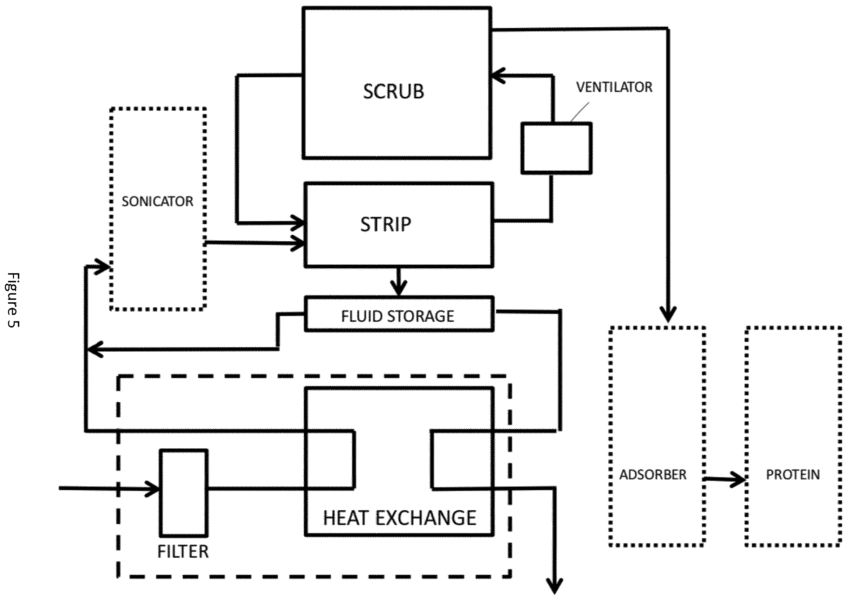

As shown in Figures 4, 5, in a preferred embodiment of the invention, given the more or less continuous flow of the overall flow, the arrangement comprises a storage means (tank) for (temporarily) storing the first (liquid) output stream, hence facilitating semi-batch processing. From said storage means, controlled pumps will pump fluid either further in the arrangement or as feedback stream.

As shown in Figure 4, in an additional embodiment of the invention, in order to produce the required high quality final (liquid) output stream from an initial input stream, in-line spectroscopic or refractometric measurement of the concentration of the first system output stream is used (despite the high concentration aimed at), said in-line measurement 900 being used to control the feedback stream, more in particular the pumps and residence time. In essence the in-line measurement determines whether the obtained liquid can flow to the next steps such as adsorber or not.

In relation to Figures 4a to 4e, it is worth emphasizing that a primary role of the in-line measurement, in that the (pumped) liquid of the scrubbing system is measured and either released toward other systems like the adsorber or feedback to the scrubber for further enriching. The inline measurement however may also serve as important input signal (20) for the control system to guide the control of the entire arrangement such as activating other pumps, and/or opening valves and/or (de-)activating the ventilator and/or controlling the frequency of the pumps and ventilators.

As shown in various figures in a second particular embodiment of the invention, the arrangement is adapted to enable that part of the heat of said first (liquid) output stream (140) (generated by the exogenous scrubbing reaction) is recovered in that said heat is used to increase the temperature of the first (or initial) liquid stream before use in said first system.

In a preferred embodiment of the invention, the arrangement comprises of a heat recovery system, more in particular a plate heat recovery system 400, with selected dimensions (to achieve both the required heat recovery performance). In view of the characteristics of the input stream in terms of density and/or viscosity for use of said special dimensioned plate heat recovery system, additional means (filters) are used on said input stream before it can flow through the heat recovery system of this kind.

The first and second particular embodiment of the invention can be and most preferably is combined.

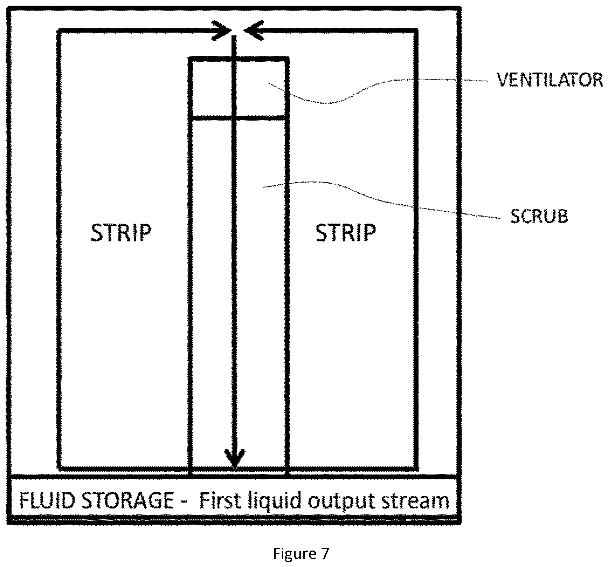

In a particular embodiment, the second system is installed in the center of the first system (see Figure 7), such that the heat in said gaseous flow (generated by the exogenous scrubbing reaction) is recovered in the entire arrangement, in particular when the first system is provided with sufficient isolation means in its outer wall.

In essence the invention relates to a combined (with a beneficial geometric positioning) stripping/scrubbing arrangement with (ventilator supported) gas feedback, with particular selected scrubbing systems. This combined arrangement may further provide a (pump supported) fluid feedback stream and/or suitable heat exchange arrangements (e.g. by use of a selected (plate) heat exchanger and related filters). Further the invention may provide in-line/real-time measurements used for control of said arrangement, e.g. the pumps and/or ventilators.

## Claims

1. A method for producing a liquid *ammonia nitrogen containing* more than 8 mass % i.e. 80.000 g/ton ammonia nitrogen in high amount output stream (100) from an initial *ammonia nitrogen containing* more than 50 g/ton ammonia nitrogen in low amount liquid or solid input stream (110), whereby with solid input stream is meant a liquid stream with solids suspended therein, with an energy consumption less than 40 MJ/kg, with an arrangement (10), said arrangement (10) comprising: a stripping system (210); and a scrubbing system (200), producing from a gaseous input flow (300), a gaseous output flow (310) and said liquid output stream (100) after addition of an acid to produce an ammonium salt, whereby said gaseous input flow (300) originates from said stripping system (210); and said gaseous output flow (310) is re-used in said stripping system (210), said arrangement (10) being **characterized in that** part of the heat (generated by the exogenous scrubbing reaction, and re-entered in the stripping system) of the output stream (140) of said stripping system is recovered **in that** said heat is used to increase the temperature of said input stream (110) before use in said stripping system (210) wherein the initial liquid of said input stream (110) or a second mixture of the initial liquid of said input stream (110) and the recovered liquid from the output stream of said stripping system (210) is mixed to a third mixture with part of or the entire re-used gaseous output flow (310) of the scrubbing system (200), before it enters the stripping system (210) and wherein said third mixture with part of the re-used gaseous output flow (310) of the scrubbing system (200) is made by a Venturi or Sonolator like system (700), preferably with an air to liquid ratio between 3/l and 20/l, more preferably 6/l and 8/l and optionally comprising one or more sonication_systems (600), applied to the initial liquid of said input stream (110) or said second mixture, before it enters the stripping system (210) to bring the ammonia molecule in an excited state and enhances the transfer from liquid to gas phase..

2. The method of claim I wherein the arrangement (10) further comprising of a plate heat recovery system (400) and one or more filters (410) are used on said input stream (110) before it can flow through said plate heat recovery system (400).

3. The method of claim I wherein the arrangement is adapted to enable that at least part (150) of the output stream (140) of said stripping system (210) is fed back to be mixed to a first mixture with the solid of said input stream (110) optionally by use of a mixing tank (500) and said first mixture is fed back into said arrangement (10), possibly via said one or more filters (400).

4. The method of claim 3 wherein a mechanical separator (510) is applied to said mixture.

5. The method of claim 3 wherein, wherein the output stream of said stripping system (210) is fed back several times on the solid of said input stream (110), hence this output stream is essentially entirely re-used in said arrangement (10) during a batch part of the process, such that the ratio between the liquid of said input stream (110) and this output stream of said stripping system can be altered.

6. The method of claim 1, wherein the arrangement (10) further comprising one or more sonication systems (600), applied to the initial liquid of said input stream (110) or said second mixture, before it enters the stripping system (210) to bring the ammonia molecule in an excited state and enhances the transfer from liquid to gas phase..

7. The method of any of the previous claims, wherein the scrubbing system (200) is installed in the center of the stripping system (210), such that the heat in said gaseous output flow (310), generated by the exogenous scrubbing reaction, is recovered, preferably when the first system is provided with sufficient isolation means in its outer wall.

8. The method of any of the previous claims, wherein said gaseous output flow (310) is essentially **entirely** re-used in said stripping system (210).

9. The method of any of the previous claims, wherein the scrubbing system (200) comprises a demister.

10. The method of claim 1, wherein said gaseous input or output flow (300, 310) is driven by a ventilator (800).

11. The method of claim 8, wherein the arrangement (10) of claim 8, wherein said gaseous input or output flow (300, 310) is entirely driven by said Venturi system ,and wherein the arrangement does not contain a ventilator.

12. The method of claim 1, whereby after the introduction of the gaseous stream in the liquid input stream in the venturi or sonolator system, a blade is provide in the middle of the flows to let a cavitation process enhance the mixing.

13. A control computer system (40), adapted for control of a method according to claims 1-12 comprising an arrangement (10), comprising a scrubbing system, comprising: means for inputting input signals (20), comprising at least an in-line measurement (900), preferably being a spectroscopic or refractometric measurement of the concentration on the output stream (100) of the scrubbing system; and said output stream is either released or fed back to said scrubbing system based thereon.

14. The computer control system of the previous claim, wherein said arrangement further comprising one or more elements of said arrangement (10), said one or more element comprising at least pumps (910) and/or valves and optionally a ventilator (800) (if present) and/or one or more sonication systems (600), said computer control system comprising computation means for generating on off control signals (30) for one or more elements of said arrangement (10), , whereby said computation means optimizes the energy consumption of said arrangement (10) with an energy consumption less than 40 MJ/kg while maintaining production of a liquid ammonia nitrogen containing more than 8 mass % i.e. 80.000g/ton ammonia nitrogen (in high amount) output stream (100) from an initial *ammonia nitrogen containing* more than 50 g/ton ammonia nitrogen (in low amount) liquid or solid input stream (110) wherein with solid input stream is meant a liquid stream with solids suspended therein.

15. The method of any of the method claims 1-12 wherein the arrangement (10), further comprising a control computer system (40) as in claims 13 or 14.

## Patentansprüche

1. Ein Verfahren zur Herstellung eines flüssigen Ammoniak-Stickstoffs mit einem Gehalt von mehr als 8 Massenprozent, d.h. 80.000 g/Tonne, in einem mit Ammoniak-Stickstoff hoch angereicherten Ausgabestroms (100) aus einem anfänglich flüssigen oder festen Eingabestroms (110), welcher mehr als 50 g/Tonne Ammoniak-Stickstoff in niedriger Menge enthält, wobei unter festem Eingabestrom ein flüssiger Strom mit darin suspendierten Feststoffen zu verstehen ist, wobei das Verfahren einen Energieverbrauch von weniger als 40 MJ/kg aufweist, unter Verwendung einer Anordnung (10), welche aufweist: ein Stripping-System (210) sowie ein Scrubber-System (200), welches nach Zugabe einer Säure zur Herstellung eines Ammoniumsalzes aus einem gasförmigen Eingabestrom (300) einen gasförmigen Ausgabestrom (310) sowie den flüssigen Ausgabestrom (100) erzeugt, wobei der gasförmige Eingabestrom (300) von dem Stripping-System (210) stammt, und der gasförmige Ausgabestrom (310) in dem Stripping-System (210) wiederverwendet wird, wobei die Anordnung (10) **dadurch gekennzeichnet ist, dass** ein Teil der Wärme des Ausgabestroms (140) des Stripping-Systems (welche durch die exogene Scrubber-Reaktion erzeugt und dem Stripping-System wiederzugeführt wird) rückgewonnen wird, indem die Wärme dazu verwendet wird, die Temperatur des Eingabestroms (110) vor der Verwendung in dem Stripping-System (210) zu erhöhen, wobei die anfängliche Flüssigkeit des Eingabestroms (110) oder ein zweites Gemisch aus der anfänglichen Flüssigkeit des Eingabestroms (110) und der aus dem Ausgabestrom des Stripping-Systems (210) rückgewonnenen Flüssigkeit mit einem Teil oder dem gesamten wiederverwendeten gasförmigen Ausgabestrom (310) des Scrubber-Systems (200) zu einem dritten Gemisch gemischt wird, noch bevor dieser in das Stripping-System (210) eintritt, und wobei die Herstellung des dritten Gemisches mit einem Teil des wiederverwendeten gasförmigen Ausgabestroms (310) des Scrubber-Systems (200) durch ein Venturi- oder Sonolator-ähnliches System (700) erfolgt, vorzugsweise mit einem Verhältnis von Luft zu Flüssigkeit zwischen 3/1 und 20/1, bevorzugter zwischen 6/1 und 8/1, und optional unter Anwendung eines oder mehrerer Beschallungssysteme (600) auf die anfängliche Flüssigkeit des Eingabestroms (110) oder auf das zweite Gemisch, noch bevor dieses in das Stripping-System (210) eintritt, um das Ammoniakmolekül in einen angeregten Zustand zu versetzen, um so den Übergang von der Flüssigphase in die Gasphase zu erleichtern.

2. Das Verfahren nach Anspruch 1, wobei die Anordnung (10) ferner ein Plattenwärmerückgewinnungs-System (400) aufweist und für den Eingabestrom (110), bevor dieser durch das Plattenwärmerückgewinnungs-System (400) fließen kann, ein oder mehrere Filter (410) verwendet werden.

3. Das Verfahren nach Anspruch 1, wobei die Anordnung so ausgelegt ist, dass zumindest ein Teil (150) des Ausgabestroms (140) des Stripping-Systems (210) rückgeführt wird, um, gegebenenfalls unter Verwendung eines Mischtanks (500), mit dem Feststoff des Eingabestroms (110) zu einem ersten Gemisch gemischt zu werden, wobei das erste Gemisch, möglicherweise über den einen oder die mehreren Filter (400), in die Anordnung (10) rückgeführt wird.

4. Das Verfahren nach Anspruch 3, bei dem das Gemisch einem mechanischen Separator (510) unterzogen wird.

5. Das Verfahren nach Anspruch 3, bei dem der Ausgabestrom des Stripping-Systems (210) auf den Feststoff des Eingabestroms (110) mehrmals rückgeführt wird, so dass dieser Ausgabestrom während eines Batch-Prozesses des Verfahrens in der Anordnung (10) im Wesentlichen vollständig wiederverwendet wird, so dass das Verhältnis zwischen der Flüssigkeit des Eingabestroms (110) und des Ausgabestroms des Stripping-Systems geändert werden kann.

6. Das Verfahren nach Anspruch 1, wobei die Anordnung (10) ferner ein oder mehrere BeschallungsSysteme (600) aufweist, welche auf die anfängliche Flüssigkeit des Eingabestroms (110) oder auf das zweite Gemisch, noch bevor dieses in das Stripping-System (210) eintritt, angewendet werden, um das Ammoniakmolekül in einen angeregten Zustand zu versetzen, um so den Übergang von der Flüssigphase in die Gasphase zu erleichtern.

7. Das Verfahren nach einem der vorherigen Ansprüche, wobei das Scrubber-System (200) im Zentrum des Stripping-Systems (210) angeordnet ist, so dass die durch die exogene Scrubber-Reaktion in dem gasförmigen Ausgabestrom (310) erzeugte Wärme rückgewonnen wird, wobei vorzugsweise das erste System in seiner Außenwand mit ausreichenden Isoliermitteln versehen ist.

8. Das Verfahren nach einem der vorherigen Ansprüche, wobei der gasförmige Ausgabestrom (310) in dem Stripping-System (210) im Wesentlichen vollständig wiederverwendet wird.

9. Das Verfahren nach einem der vorherigen Ansprüche, wobei das Scrubber-System (200) einen Tropfenabscheider aufweist.

10. Das Verfahren nach Anspruch 1, wobei der Fluss des gasförmigen Eingabe- oder Ausgabestroms (300, 310) durch einen Ventilator (800) bewirkt wird.

11. Das Verfahren nach Anspruch 8, wobei in der Anordnung (10) nach Anspruch 8 der Fluss des gasförmigen Eingabe- oder Ausgabestroms (300, 310) vollständig durch das Venturi-System bewirkt wird und die Anordnung keinen Ventilator aufweist.

12. Das Verfahren nach Anspruch 1, wobei nach dem Einleiten des gasförmigen Stroms in den flüssigen Eingabestrom im Venturi- oder Sonolator-System in der Mitte der Ströme eine Schaufel vorgesehen ist, um im Rahmen eines Kavitationsprozesses die Durchmischung zu verbessern.

13. Ein Computer-Steuerungs-System (40), das zur Steuerung eines Verfahrens nach einem der Ansprüche 1 bis 12 geeignet ist, mit einer Anordnung (10), die ein Scrubber-System umfasst, aufweisend:
Mittel zum Eingeben von Eingabesignalen (20), im Rahmen zumindest einer Inline-Messung (900), vorzugsweise in Form einer spektroskopischen oder refraktometrischen Messung der Konzentration in dem Ausgabestrom (100) des Scrubber-Systems, wobei der Ausgabestrom entweder freigegeben oder zu dem Scrubber-System entsprechend rückgeführt wird.

14. Das Computer-Steuerungs-System nach dem vorherigen Anspruch, wobei die Anordnung ferner ein oder mehrere Elemente dieser Anordnung (10) umfasst, wobei das eine oder die mehreren Elemente zumindest Pumpen (910) und/oder Ventile sowie optional einen Ventilator (800) (falls vorhanden) und/oder ein oder mehrere Beschallungssysteme (600) aufweisen, wobei das Computer-Steuerungs-System zum Erzeugen von Ein-Aus-Steuersignalen (30) für ein oder mehrere Elemente der Anordnung (10) eine Berechnungseinrichtung aufweist, wobei die Berechnungseinrichtung den Energieverbrauch der Anordnung (10) hinsichtlich eines Energieverbrauchs von weniger als 40 MJ/kg optimiert, während die Produktion eines flüssigen Ammoniak-Stickstoffs mit einem Gehalt von mehr als 8 Massenprozent, d. h. 80.000 g/t, aufrechterhalten wird, d.h. 80.000 g/Tonne Ammoniak-Stickstoff im (hoch angereicherten) Ausgabestrom (100) aus einem anfänglich flüssigen oder festen Eingabestrom (110), welcher mehr als 50 g/Tonne Ammoniak-Stickstoff (in niedriger Menge) enthält, wobei unter festem Eingabestrom ein flüssiger Strom mit darin suspendierten Feststoffen zu verstehen ist.

15. Das Verfahren nach einem der Verfahrensansprüche 1 bis 12, wobei die Anordnung (10) ferner ein Computer-Steuerungs-System (40) gemäß Anspruch 13 oder 14 aufweist.

## Revendications

1. Procédé de production d'azote ammoniacal liquide contenant plus de 8 % en masse, c'est-à-dire, 80 000 g/tonne d'azote ammoniacal dans un flux de sortie (100) à forte concentration à partir d'azote ammoniacal initial contenant de plus de 50 g/tonne d'azote ammoniacal dans un flux d'entrée liquide ou solide (110) à faible concentration, où un flux d'entrée solide signifie un flux d'entrée liquide contenant des solides en suspension à l'intérieur, avec une consommation en énergie inférieure à 40 MJ/kg, avec un agencement (10), ledit agencement (10) comprenant : un dispositif de séparation (210) ; et un dispositif de décapage (200), produisant à partir d'un écoulement d'entrée gazeux (300), un écoulement de sortie gazeux (310) et ledit flux de sortie liquide (100) après addition d'un acide afin de produire un sel d'ammonium, dans lequel ledit écoulement d'entrée gazeux (300) provient dudit dispositif de séparation (210) ; et ledit écoulement de sortie gazeux (310) est réutilisé dans ledit dispositif de séparation (210), ledit agencement (10) étant **caractérisé en ce qu'**une partie de la chaleur (produite par la réaction de décapage exogène, et réintroduite dans le dispositif de séparation) du flux de sortie (140) dudit dispositif de séparation est récupérée, **en ce que** ladite chaleur est utilisée afin d'augmenter la température dudit flux d'entrée (110) avant l'utilisation dans ledit dispositif de séparation (210) dans lequel le liquide initial dudit flux d'entrée (110) ou un deuxième mélange du liquide initial dudit flux d'entrée (110) et du liquide récupéré à partir du flux de sortie dudit dispositif de séparation (210) est mélangé à un troisième mélange avec une partie ou la totalité de l'écoulement de sortie gazeux (310) réutilisé du dispositif de décapage (200), avant qu'il n'entre dans le dispositif de séparation (210) et dans lequel ledit troisième mélange avec une partie de l'écoulement de sortie gazeux (310) réutilisé du dispositif de décapage (200) est réalisé par un dispositif du type Venturi ou Sonolator (700), de préférence, avec un rapport d'air sur liquide compris entre 3/1 et 20/1, plus préférablement, entre 6/1 et 8/1 et comprenant, en variante, un ou plusieurs dispositifs à ultrasons (600), appliqués sur le liquide initial dudit flux d'entrée (110) ou ledit deuxième mélange, avant qu'il n'entre dans le dispositif de séparation (210) afin de placer la molécule d'ammoniaque dans un état excité et d'améliorer le transfert de la phase liquide à gazeuse.

2. Procédé selon la revendication 1, dans lequel l'agencement (10), comprenant, en outre, un dispositif de récupération de chaleur à plaque (400) et un ou plusieurs filtres (410) sont utilisés sur ledit flux d'entrée (110) avant qu'il puisse traverser ledit dispositif de récupération de chaleur à plaque (400).

3. Procédé selon la revendication 1, dans lequel l'agencement est adapté de manière à permettre la réintroduction d'au moins une partie (150) du flux de sortie (140) dudit dispositif de séparation (210) afin de la mélanger à un premier mélange avec le solide dudit flux d'entrée (110), en variante, en utilisant un réservoir de mélange (500) et ledit premier mélange est réintroduit dans ledit agencement (10), éventuellement par l'intermédiaire desdits un ou plusieurs filtres (400).

4. Procédé selon la revendication 3, dans lequel un séparateur mécanique (510) est utilisé sur ledit mélange.

5. Procédé selon la revendication 3, dans lequel, le flux de sortie dudit dispositif de séparation (210) est réintroduit plusieurs fois sur le solide dudit flux d'entrée (110), par conséquent, ce flux de sortie est sensiblement totalement réutilisé dans ledit agencement (10) au cours d'une partie de traitement par lots, de telle sorte que le rapport entre le liquide dudit flux d'entrée (110) et ce flux de sortie dudit dispositif de séparation peut être modifié.

6. Procédé selon la revendication 1, dans lequel l'agencement (10) comprenant, en outre, un ou plusieurs dispositifs à ultrasons (600), appliqués sur le liquide initial dudit flux d'entrée (110) ou dudit deuxième mélange, avant qu'il n'entre dans le dispositif de séparation (210) afin de mettre la molécule d'ammoniaque dans un état excité et d'améliorer le transfert depuis la phase liquide à gazeuse.

7. Procédé selon l'une quelconque des revendications précédentes, dans lequel le dispositif de décapage (200) est installé au centre du dispositif de séparation (210), de telle sorte que la chaleur produite par la réaction de décapage exogène dans ledit écoulement de sortie gazeux (310), est récupérée,
de préférence, lorsque le premier dispositif comporte des moyens d'isolation suffisants sur sa paroi externe.

8. Procédé selon l'une quelconque des revendications précédentes, dans lequel ledit écoulement de sortie gazeux (310) est réutilisé sensiblement en totalité dans ledit dispositif de séparation (210).

9. Procédé selon l'une quelconque des revendications précédentes, dans lequel le dispositif de décapage (200) comprend un dévésiculeur.

10. Procédé selon la revendication 1, dans lequel ledit écoulement d'entrée ou de sortie gazeux (300, 310) est entraîné par un ventilateur (800).

11. Procédé selon la revendication 8, dans lequel l'agencement (10) selon la revendication 8, dans lequel ledit écoulement d'entrée ou de sortie gazeux (300, 310) est entièrement entraîné par ledit dispositif du type Venturi et dans lequel l'agencement ne contient pas de ventilateur.

12. Procédé selon la revendication 1, par lequel après l'introduction du flux gazeux dans le flux d'entrée liquide dans le dispositif du type Venturi ou Sonolator, une lame est agencée au centre des écoulements afin de permettre qu'un processus de cavitation améliore le mélange.

13. Dispositif informatique de commande (40), adapté afin d'assurer la commande d'un procédé selon les revendications 1 à 12 comprenant un agencement (10), comprenant un dispositif de décapage, comprenant : des moyens d'introduction de signaux d'entrée (20), comprenant au moins un dispositif de mesure intégré (900), de préférence, un dispositif de mesure spectroscopique ou réfractométrique de la concentration sur le flux de sortie (100) du dispositif de décapage ; et ledit flux de sortie est soit libéré soit réintroduit dans ledit dispositif de décapage sur la base de ce dernier.

14. Dispositif informatique de commande selon la revendication précédente, dans lequel ledit agencement comprenant, en outre, un ou plusieurs éléments dudit agencement (10), lesdits un ou plusieurs éléments comprenant au moins des pompes (910) et/ou des vannes et, en variante, un ventilateur (800) (si présent) et/ou un ou plusieurs dispositifs à ultrasons (600), ledit dispositif informatique de commande comprenant des moyens de calcul destinés à produire des signaux de commande de mise en service et d'arrêt (30) pour un ou plusieurs éléments dudit agencement (10), de telle sorte que ledit moyen de calcul optimise la consommation d'énergie dudit agencement (10) avec une consommation d'énergie inférieure à 40 MJ/kg tout en maintenant la production d'azote ammoniacal liquide contenant plus de 8 % en masse, c'est-à-dire un flux de sortie (100) à 80 000 g/tonne d'azote ammoniacal (à forte concentration) à partir d'un flux d'entrée de liquide ou solide (110) d'azote ammoniacal initial contenant plus de 50 g/tonne d'azote ammoniacal (à faible concentration) dans lequel un flux d'entrée solide signifie un flux de liquide contenant des solides en suspension à l'intérieur.

15. Procédé selon l'une quelconque des revendications 1 à 12, dans lequel l'agencement (10), comprend, en outre, un dispositif informatique de commande (40) selon les revendications 13 ou 14.
